# EUROPEAN PATENT APPLICATION

(11) **EP 1 898 325 A1**
(43) Date of publication of application: **12.03.2008**
(21) Application number: 07253397.9
(22) Date of filing: 29.08.2007
(51) Int. Cl.: G06F 17/30

(54) **Apparatus, method and program for searching for content using keywords from subtitles**

(30) Priority: 01.09.2006 JP 2006238107
(71) Applicant: Sony Corporation, Minato-ku Tokyo 108-0075 (JP)
(72) Inventor: Sho, Murakoshi, Tokyo 108-0075 (JP)
(74) Representative: Mills, Julia

(57) **Abstract**

A playback apparatus includes: playback means for playing back a content to display images; extraction means for extracting keywords from subtitles tied to an image being displayed; keyword presentation means for presenting the keywords extracted by the extraction means; and searching means for searching a content on the basis of a keyword selected from the keywords presented by the keyword presentation means.

## Description

The present invention contains subject matter related to Japanese Patent Application JP 2006-238107 filed in the Japanese Patent Office on September 1, 2006,

The present invention relates to the field of playback apparatus, searching methods, and programs. More particularly, the present invention relates to a playback apparatus, a searching method, and program capable of making a keyword search easily during the playback of a content.

Digital recording apparatuses, which have become widespread in recent years, include a hard disk that has an increasingly larger capacity, and thus have become possible to record a large number of programs.

Thus, various techniques have been proposed in order to search for an aimed program or aimed screen image promptly out of all the recorded programs.

For example, Japanese Unexamined Patent Application Publication No. 2004-80476 has disclosed a technique in which a search is made for the subtitles including a character string which is the same as or similar to the character string entered by the user, and a search is made for the screen image presented at the same time with the searched subtitles. If the user remembers a character string on the aimed screen image, the user can search for the aimed screen image by entering that character string.

When screen images are searched on the basis of a character string, in general, it is necessary for the user to enter the character string to be a search condition using a software keyboard, etc.

Accordingly, for example when something occurs to the user's mind while the user is watching a certain program, and the user attempts to search for the screen images related to that matter, it is necessary for the user to memorize the character string representing that matter, to pause in the watching of the program for a while, and to enter the character string that has been kept in mind. It often happens that a specific content arouses a special interest of the user while the user is watching a program. At such times, it is desirable to make a search as easily as possible.

The present invention has been made in view of these circumstances. It is desirable to allow a keyword search of a content easily while the content is played back.

Various respective aspects and features of the invention are defined in the appended claims. Combinations of features from the dependent claims may be combined with features of the independent claims as appropriate and not merely as explicitly set out in the claims. According to an embodiment of the present invention, there is provided a playback apparatus including: playback means for playing back a content to display images; extraction means for extracting keywords from subtitles tied to an image being displayed; keyword presentation means for presenting the keywords extracted by the extraction means; and searching means for searching a content on the basis of a keyword selected from the keywords presented by the keyword presentation means.

In a playback apparatus according to the embodiment of the present invention, when a user gives an instruction, the extraction means may extract a keyword from subtitles tied to an image being displayed.

A playback apparatus according to the embodiment of the present invention may further include cutting means for cutting a content for each scene. In this case, the searching means may search for a scene including an image to which subtitles including a keyword selected from the keywords presented by the keyword presentation means are tied from the scenes cut by the cutting means.

In a playback apparatus according to the embodiment of the present invention, the searching means may search for a program including a keyword selected from the keywords presented by the keyword presentation means in program information.

A playback apparatus according to the embodiment of the present invention may further include content presenting means for presenting information on a content searched by the searching means. In this case, the playback means plays back a content selected from the contents whose information has been presented by the content presenting means.

According to an embodiment of the present invention, there is provided a method of searching or a program, including the steps of: playing back a content to display images; extracting keywords from subtitles tied to an image being displayed; presenting extracted keywords; and searching a content on the basis of a keyword selected from the presented keywords.

In a playback apparatus according to an embodiment of the present invention, a keyword is extracted from subtitles tied to an image being displayed, the extracted keywords are presented; and a content is searched on the basis of a keyword selected from the presented keywords.

In a playback apparatus according to an embodiment of the present invention, the user can easily make a keyword search of a content being played back.

Embodiments of the invention will now be described with reference to the accompanying drawings, throughout which like parts are referred to by like references, and in which:
Fig. 1 is a diagram illustrating a recording/playback apparatus according to an embodiment of the present invention;
Fig. 2 is a diagram illustrating an example of a screen displayed on a TV;
Fig. 3 is a diagram illustrating another example of a screen displayed on a TV;
Fig. 4 is a diagram illustrating still another example of a screen displayed on a TV;
Fig. 5 is a diagram illustrating an example of a screen displayed on a TV;
Fig. 6 is a diagram illustrating another example of a screen displayed on a TV;
Fig. 7 is a block diagram illustrating an example of the configuration of the recording/playback apparatus;
Fig. 8 is a flowchart illustrating recording processing of the recording/playback apparatus;
Fig. 9 is a flowchart illustrating playback processing of the recording/playback apparatus;
Fig. 10 is a diagram illustrating an example of a screen displayed on a TV;
Fig. 11 is a flowchart illustrating another playback processing of the recording/playback apparatus;
Fig. 12 is a diagram illustrating an example of a screen displayed on a TV;
Fig. 13 is a diagram illustrating an example of a screen displayed on a TV;
Fig. 14 is a flowchart illustrating another playback processing of the recording/playback apparatus; and
Fig. 15 is a block diagram illustrating an example of the configuration of a personal computer.

In the following, a description will be given of an embodiment of the present invention. The relationship between the constituent features of the present invention and the embodiment described in the specification or the drawings is exemplified as follows. This description is for confirming that an embodiment supporting the present invention is included in the specification or the drawings. Accordingly, if there is an embodiment included in the specification or the drawings, but not included here as an embodiment corresponding to the constituent features, the fact does not mean that the embodiment does not corresponds to the constituent features. On the contrary, if an embodiment is included here as constituent features corresponding to the present invention, the fact does not mean the embodiment does not correspond to the features other than the constituent features.

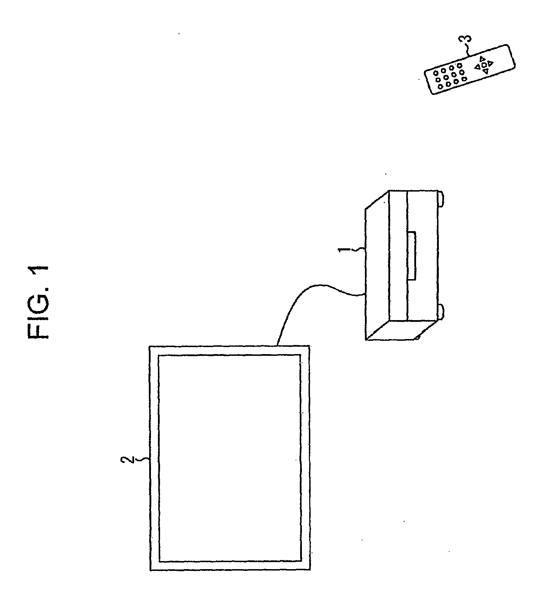

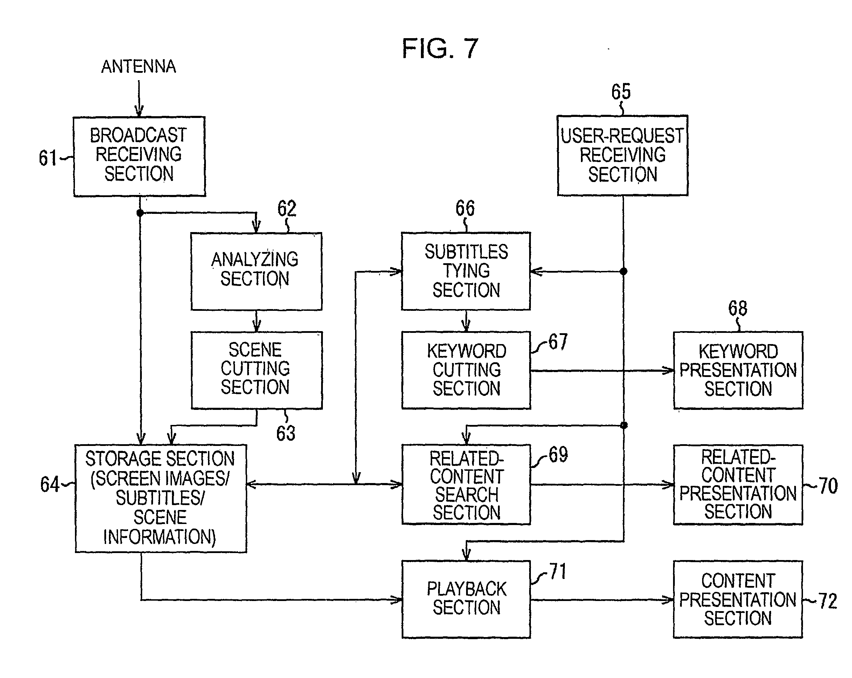

According to an embodiment of the present invention, there is provided a playback apparatus (for example, the recording/playback apparatus 1 in Fig. 1) including: playback means (for example, the playback section 71 in Fig. 7) for playing back a content to display screen images; extraction means (for example, the keyword cutting section 67 in Fig. 7) for extracting keywords from subtitles tied to a screen image being displayed; keyword presentation means (for example, the keyword presentation section 68 in Fig. 7) for presenting the keywords extracted by the extraction means; and searching means (for example, the related-content search section 69 in Fig. 7) for searching a content on the basis of a keyword selected from the keyword presented by the keyword presentation means.

This playback apparatus may further include cutting means (for example, the scene cutting section 63 in Fig. 7) for cutting a content for each scene.

The playback apparatus may further include content presenting means (for example, the related-content presenting section 70 in Fig. 7) for presenting information on a content searched by the searching means.

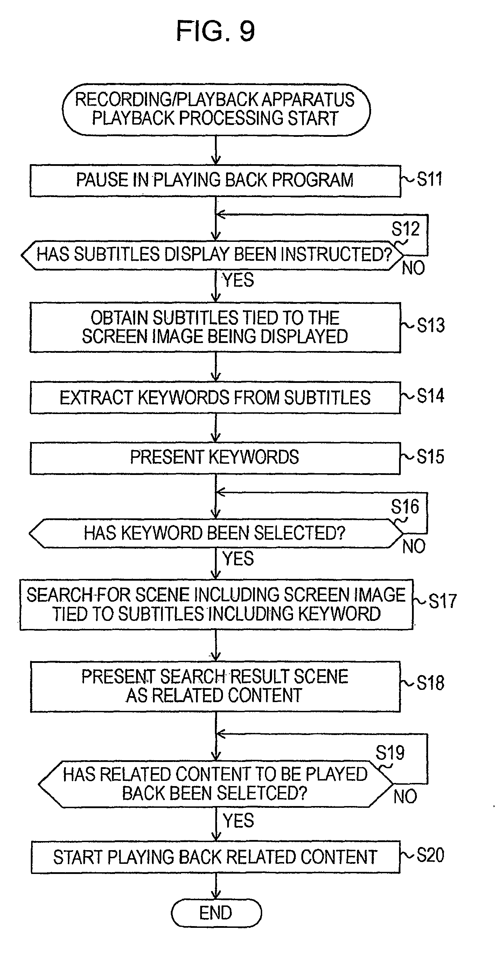

According to an embodiment of the present invention, there is provided a method of searching or a program, including the steps of: playing back a content to display screen images; extracting keywords from subtitles tied to the screen image being displayed; presenting an extracted keyword; and searching a content (for example, step S17 in Fig. 9) on the basis of a keyword selected from the presented keyword.

In the following, a description will be given of embodiments of the present invention with reference to the drawings.

Fig. 1 is a diagram illustrating a recording/playback apparatus 1 according to an embodiment of the present invention.

As shown in Fig. 1, a TV 2 is connected to the recording/playback apparatus 1. A remote controller 3 is for operating the recording/playback apparatus 1, and is used by the user.

The recording/playback apparatus 1 includes a recording medium, such as a hard disk, etc., and records programs supplied by, for example a digital television broadcasting, or a broadcasting through the Internet into the hard disk. That is to say, a signal, etc., from an antenna not shown in the figure is supplied to the recording/playback apparatus 1. The recording/playback apparatus 1 plays back the recorded program in accordance with the operation by the user using the remote controller 3, and outputs the screen images and the sound of the programs to the TV 2.

Also, when the recording/playback apparatus 1 is playing back a recorded program to display a program screen image onto the TV 2, if the user performs a predetermined operation using the remote controller 3, the recording/playback apparatus 1 presents keywords on the screen image being displayed to the user. The recording/playback apparatus 1 allows the user to search for a scene related to the screen image being displayed from the scenes of the recorded programs, or to search for the program related to the screen image being displayed from the recorded programs on the basis of the keyword selected by the user from the presented keywords. The presentation of the keywords is carried out using the subtitles tied to the screen image being displayed. In the following, the information to be searched on the basis of the keyword of the scenes and programs related to the screen image being displayed is appropriately referred to as a related content.

The remote controller 3 transmits a signal corresponding to the user's operation to the recording/playback apparatus 1. The remote controller 3 is provided with a playback button which is operated when the playback of a recorded program is started, a pause button which is operated when the playback is paused, a subtitles-display button which is operated when subtitles are displayed, a cross button which is operated when a cursor displayed on the TV 2 is moved, a decision button which is operated when an item is determined, and the like.

Here, a description will be given of a UI (User Interface) displayed when a related content is searched. Various screens are displayed on the TV 2 by the recording/playback apparatus 1 in accordance with the operation of the remote controller 3 by the user.

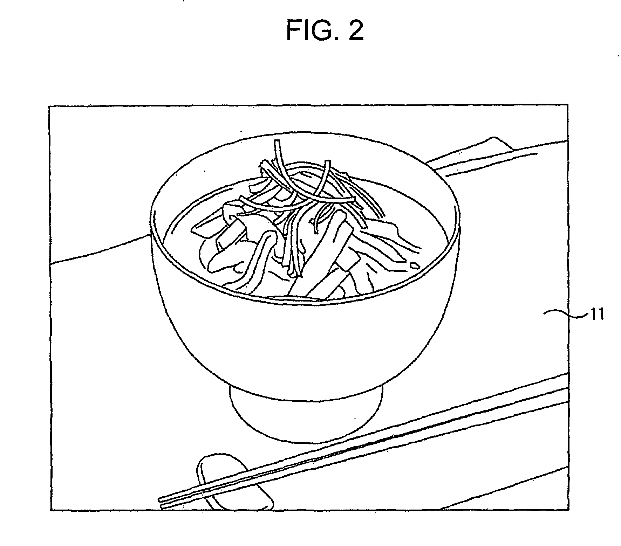

Fig. 2 is a diagram illustrating an example of the screen displayed on the TV 2.

For example, when a cooking program has been selected from the recorded programs, and if the user has operated a pause button disposed on the remote controller 3, the playback of the cooking program is stopped. As shown in Fig. 2, the TV 2 continues to display a screen image 11, which is a screen image of the cooking program displayed when the user has operated the pause button.

In a state in which the screen of Fig. 2 is displayed, when the user has operated a subtitles-display button disposed on the remote controller 3, the subtitles are superimposed on the screen image 11 on the TV 2. The data of the programs broadcast by digital television broadcasting includes subtitles data in addition to screen image data and sound data. Thus, the user can select on/off of the subtitles display by operating the subtitles-display button. The subtitles data include the data specifying the display timing in addition to the text data displayed as subtitles.

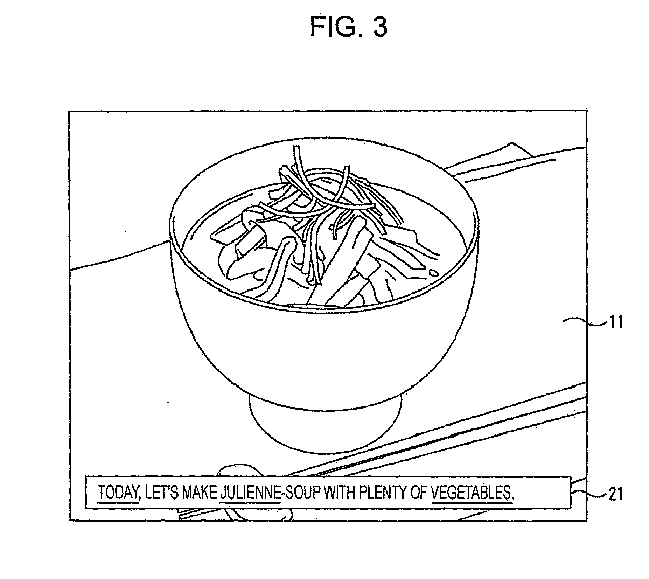

Fig. 3 is a diagram illustrating an example of a screen displayed on the TV 2 when the subtitles-display button is operated in the state of Fig. 2.

In the example of Fig. 3, subtitles 21 are superimposed on the screen image 11 at the lower side of the screen. The subtitles 21 are the subtitles tied to the screen image 11, and express the contents of the screen image 11, for example the words spoken by the performer of the cooking program when the screen image 11 is displayed. In the example of Fig. 3, "Today, let's make julienne-soup with plenty of vegetables." is displayed as the subtitles 21.

In the recording/playback apparatus 1, the subtitles representing the contents of the screen image are managed in relation to each screen image of a recorded program. For example, when a recorded program is a movie, the words of a person who appears in the screen image, etc., are displayed as subtitles. The display timing of a screen image is synchronized with the display timing of the subtitles representing the contents. Thus, to a screen image displayed at certain timing, the subtitles displayed at the same timing as that screen image is tied.

On the other hand, if a recorded program is on news or a cooking program, the subtitles representing the contents are sometimes displayed with a delay from the screen image at the time of broadcasting. Thus, to a screen image displayed at certain timing, the subtitles displayed before and after a predetermined time period on the basis of the timing of that screen display are tied.

Also, in the example of Fig. 3, "today", "vegetables", and "julienne" are underlined and highlighted in "Today, let's make julienne-soup with plenty of vegetables". These words "today", "vegetables", and "julienne" are extracted as keywords by the recording/playback apparatus 1 by performing morphological analysis, etc., on the subtitles 21 "Today, let's make julienne-soup with plenty of vegetables."

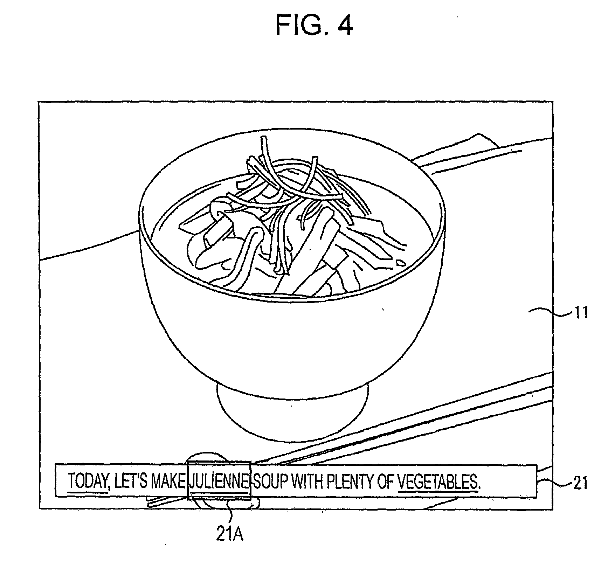

Fig. 4 is a diagram illustrating an example of a screen displayed on the TV 2 following the screen of Fig. 3.

In the example in Fig. 4, the cursor 21A is placed on "julienne" among the keywords "today", "vegetables", and "julienne" that have been extracted from the subtitles 21. The user can move the cursor 21A position on another keyword by pressing the right button or the left button of the cross key disposed on the remote controller 3. The user can select the keyword on which the cursor 21A is placed at that time as the keyword to be a basis of the search of the related content.

When the user got interested in specific contents by watching a certain screen image of a program, it often happens that the subtitles tied to the screen image displayed at that time include a word on the matter that interested the user just like "julienne". Thus, the keyword extracted from such subtitles can be used for a basis for searching the information on the matter in which the user is interested.

In this regard, keywords are not limited only to the words that are displayed with an underline in the subtitles as shown in Fig. 4, but also may be displayed as a list of only keywords.

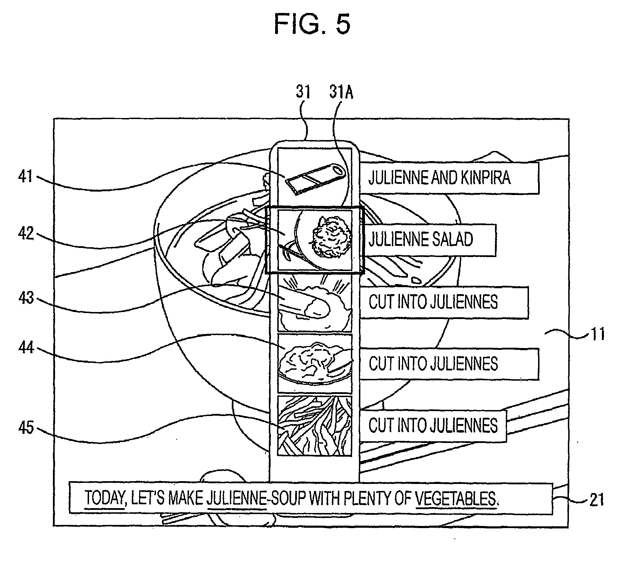

Fig. 5 is a diagram illustrating an example of another screen displayed on the TV 2.

In the state of Fig. 4, in which the cursor 21A is placed on the keyword "julienne", when the user has operated a decision button, the recording/playback apparatus 1 searches for a related content on the basis of the keyword "julienne", and the search result is displayed on the TV 2.

In the example in Fig. 5, a list 31 is displayed in the form extending upward from the position in the subtitles 21 of "julienne", namely the keyword which has become the basis of the search. Thumbnails 41 to 45 are displayed in the list 31. The thumbnails 41 to 45 are still images representing scenes including screen images other than the screen image 11, which are tied to the subtitles including the keyword "julienne" selected by the user. That is to say, in the recording/playback apparatus 1, all the recorded programs are managed by being separated for each scene. In this example, a scene is searched as a related content.

In this manner, for example a keyword is displayed along the direction of the subtitles 21, and the search result of the related contents are displayed in the direction perpendicular to the direction of the subtitles 21 on the basis of the position of the selected keyword.

The character string "julienne and kinpira" is displayed at the right of the thumbnail 41, the character string "julienne salad" is displayed at the right of the thumbnail 42. Also, the character string "cut into juliennes" is displayed at the right of the thumbnail 43, and the character string "cut into juliennes" is displayed at the right of the thumbnail 44. The character string "cut into juliennes" is displayed at the right of the thumbnail 45.

These character strings next to the thumbnails are portions of the subtitles including the keyword "juliennes" selected by the user out of the subtitles tied to the screen images included in the scene represented by the thumbnail. The user can confirm the scenes presented as the search result of the related contents from the character strings displayed next to the thumbnails.

Also, in the example of Fig. 5, the cursor 31A is placed on the thumbnail 42. The user can move the cursor 31A position on another thumbnail by pressing the up button or the down button of the cross key disposed on the remote controller 3. The user can select the scene represented by the thumbnail on which the cursor 31A is placed at that time as the related content to be played back.

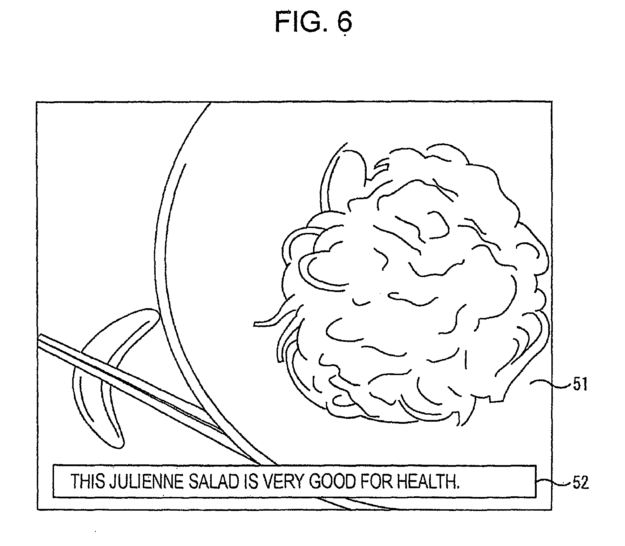

Fig. 6 is a diagram illustrating still anther example of a screen displayed on the TV 2.

In the state of Fig. 5 in which the cursor 31A is placed on the thumbnail 42, when the user has operated a decision button, the recording/playback apparatus 1 starts the playback of the scene represented by the thumbnail 42, and as shown in Fig. 5, the screen image is displayed on the TV 2.

The screen image 51 of Fig. 6 is the beginning image included in the scene represented by the thumbnail 42. In the course of playing back the scene represented by the thumbnail 42, the screen image following the screen image 51 is displayed in sequence onto the TV 2. The subtitles 52 in Fig. 6 are the subtitles tied to the screen image 51.

In this manner, the user can pause in the playback of the program by operating the remote controller 3 while watching a certain recorded program, and select a keyword to be a basis for searching for the related content from the keywords displayed when the subtitles-display button is operated.

That is to say, when the user searches for the related content, it is not necessary for the user to enter a keyword to be a basis of the search by operating a software keyboard, etc., by himself/herself. The user is allowed to easily conduct a keyword search for the related content during watching a program, and to start the playback of the searched related content.

For example, it often happens that while watching a program, the user gets interested in specific contents introduced in that program, pauses in watching the program, and wants to watch the contents related to the contents that aroused special interest. At such times, it is possible to easily change the content to be played back to an interesting one. A description will be given below of the processing of the recording/playback apparatus 1 for searching and playing back the related content with reference to the flowcharts.

Fig. 7 is a block diagram illustrating an example of the configuration of the recording/playback apparatus 1.

At least a part of the functional blocks shown in Fig. 7 are achieved by executing predetermined programs by the CPU (Central Processing Unit) disposed in the recording/playback apparatus 1.

As shown in Fig. 7, the recording/playback apparatus 1 includes a broadcast receiving section 61, an analyzing section 62, a scene cutting section 63, a storage section 64, a user-request receiving section 65, a subtitles tying section 66, a keyword cutting section 67, a keyword presentation section 68, a related-content search section 69, a related-content presentation section 70, a playback section 71, and a content presentation section 72.

The broadcast receiving section 61 receives a broadcast wave signal from the antenna, demodulates the signal, and obtains an MPEG-TS (Moving Picture Experts Group-Transport Stream). The broadcast receiving section 61 extracts the data (program screen images, sound, and subtitles data) of the program to be recorded from the MPEG-TS, and outputs the extracted data to the analyzing section 62 and the storage section 64. The programs that have been broadcast through the Internet may be received by the broadcast receiving section 61.

The analyzing section 62 analyzes the characteristics of the screen images and sound of the program whose data is supplied from the broadcast receiving section 61 as preprocessing of cutting the entire program into a plurality of scenes, and outputs the amount of characteristics, which is the analysis result, to the scene cutting section 63. The analyzing section 62 determines a change in the pixel value of the continuous screen images (frames), whether with or without a telop display as an analysis of the screen images, and determines a change in the sound volume, etc., as an analysis of the sound.

The scene cutting section 63 determines a scene section on the basis of the amount of the characteristic supplied from the analyzing section 62, and outputs scene information, which is the information indicating the start position and the end position of each section to the storage section 64. When the above-described analysis result is supplied from the analyzing section 62, for example the position at which the amount of change of the pixel value is greater than a threshold value, the position at which the telop display has started, the position at which the amount of change in sound volume is greater than a threshold value, etc., are used for separating the scenes. In this regard, the determination of a scene section may be made by the combination of various analysis result of the screen images and the sound.

The storage section 64 includes a hard disk, and records the data of the program supplied from the broadcast receiving section 61 together with the scene information supplied from the scene cutting section 63. The program information of the program, which is included in the EPG (Electronic Program Guide) obtained by the broadcast receiving section 61, is added to the program data recorded in the storage section 64 as attribute information.

The user-request receiving section 65 receives a signal from the remote controller 3, and outputs the information representing the contents of the user's operation to each section of the subtitles tying section 66, the related-content search section 69, and the playback section 71.

The subtitles tying section 66 manages the screen images and the subtitles recorded in the storage section 64 by tying them. For example, as described above, the subtitles tying section 66 manages the subtitles displayed at the same timing as the screen image, and the subtitles displayed within a predetermined time before and after on the basis of the display timing of the screen image for each screen image.

Also, when the information indicating that the user has operated the subtitles-display button disposed on the remote controller 3 is supplied from the user-request receiving section 65 during the playback of a recorded program, the subtitles tying section 66 identifies the scenes including the screen image being displayed on the TV 2 at that time on the basis of the scene information recorded in the storage section 64. The information indicating the position of the screen being displayed is supplied from the playback section 71 to the subtitles tying section 66.

When the subtitles tying section 66 identifies the scene including the screen image being displayed on the TV 2, the subtitles tying section 66 obtains the data of the subtitles group (the subtitles tied to the individual screen images included in the scene) tied to a specific scene from the data of the subtitles recorded in the storage section 64. The subtitles tying section 66 outputs the obtained subtitles group data to the keyword cutting section 67. The subtitles group data output to the keyword cutting section 67 includes the subtitles data tied to the screen image displayed when the user has operated the subtitles-display button.

The keyword cutting section 67 extracts a keyword from the subtitles group whose data has been supplied from the subtitles tying section 66, and outputs the extracted keyword data to the keyword presentation section 68. The subtitles data is also supplied to the keyword presentation section 68 appropriately.

The keyword cutting section 67 performs, for example morphological analysis on individual subtitles constituting a subtitles group, and extracts the same morphemes as those stored in a DB (database) held by the keyword cutting section 67. The DB held by the keyword cutting section 67 stores place names, such as tourist spot names, hot spring names, etc., store names, such as a famous restaurant, etc., personal names, such as a player, an artist, etc., in addition to the words, such as the above-described "today", "vegetable", "julienne", etc. The keyword may be extracted in accordance with another algorithm.

The keyword presentation section 68 displays the keyword that can be selected as a basis of the related content search onto the TV 2 to present it to the user. As shown in Fig. 4, when the keyword presentation section 68 displays a keyword in an underlined form in the subtitles, the keyword presentation section 68 displays all the subtitles tied to the screen image being displayed on the basis of the subtitles data supplied from the keyword cutting section 67, identifies the keywords included in the subtitles on the basis of the keyword data supplied from the keyword cutting section 67, and highlights the identified keyword.

Also, when the keyword presentation section 68 displays only the keywords in a list, the keyword presentation section 68 arranges only the keywords in a predetermined area on a screen on the basis of the keyword data supplied from the keyword cutting section 67.

When information indicating that a predetermined keyword is selected from the keywords presented by the keyword presentation section 68 is supplied from the user-request receiving section 65, the related-content search section 69 searches for the related content from the program or the program scenes that are recorded in the storage section 64.

As described above, when searching for a program scene, the related-content search section 69 identifies the screen image tied to the subtitles including the keyword selected by the user on the basis of the screen images and subtitles data stored in the storage section 64. Also, the related-content search section 69 identifies the scene including the identified screen image on the basis of the scene information recorded in the storage section 64, and obtains the identified scene as the search result of the related content. The related-content search section 69 outputs, for example the beginning screen image data and the subtitles data of the identified scene to the related-content presentation section 70.

In this regard, for related content, for example the entire program may be searched. In this case, the related-content search section 69 obtains the programs whose program information includes the keyword selected by the user as the search result, and outputs the beginning screen image data of the obtained program and the title data of the program included in the program information to the related-content presentation section 70. The program information related to the program data and recorded in the storage section 64 includes performers in the program, the summary of the program, etc. For example, when the keyword selected by the user is a personal name, the programs on which that person appears are obtained as the search result of the related content.

The related-content presentation section 70 displays the information on the related content on the basis of the data supplied from the related-content search section 69 onto the TV 2 to present to the user. For example, as described with reference to Fig. 5, the related-content presentation section 70 displays a thumbnail on the basis of the screen image data supplied from the related-content search section 69, and displays a part of the subtitles and the program title next to the thumbnail.

When the user has instructed to start the playback of the recorded program, the playback section 71 reads the recorded program data from the storage section 64, and outputs the screen images and sound obtained by the playback to the content presentation section 72.

Also, when the information indicating that a predetermined related content is selected from the related contents presented by the related-content presentation section 70 is supplied from the user-request receiving section 65, the playback section 71 reads the data of the selected related content from the storage section 64, and outputs the screen images and sound obtained by the playback to the content presentation section 72.

The content presentation section 72 displays the screen images supplied from the playback section 71 onto the TV 2, and outputs the sound from the speaker of the TV 2.

Here, a description will be given of the operation of the recording/playback apparatus 1 having the above configuration.

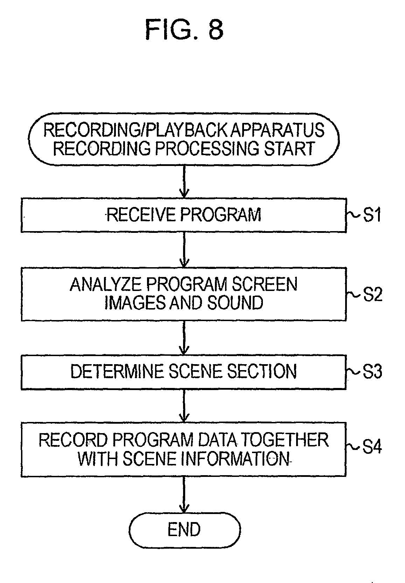

First, with reference to the flowchart in Fig. 8, a description will be given of processing of the recording/playback apparatus 1 recording a program.

In step S1, the broadcast receiving section 61 receives a broadcast wave signal from the antenna not shown in the figure, demodulates the signal, and obtains an MPEG-TS. The broadcast receiving section 61 extracts the data of the program to be recorded from the MPEG-TS, and outputs the extracted data to the analyzing section 62 and the storage section 64. Also, the broadcast receiving section 61 extracts the program information of the program to be recorded from the EPG to be supplied by being multiplexed together with the program data, etc., and outputs the extracted program information to the storage section 64.

In step S2, the analyzing section 62 analyzes the characteristics of the screen images and sound of the program whose data is supplied from the broadcast receiving section 61, and outputs the amount of characteristics, which is the analysis result, to the scene cutting section 63.

In step S3, the scene cutting section 63 determines a scene section on the basis of the amount of the characteristics supplied from the analyzing section 62, and outputs scene information, which is the information indicating the start position and the end position of each section, to the storage section 64.

In step S4, the storage section 64 records the data of the program supplied from the broadcast receiving section 61 in relation to the scene information supplied from the scene cutting section 63, and the processing terminates. The program information supplied from the broadcast receiving section 61 is also added to the program data as attribute information.

Next, with reference to the flowchart in Fig. 9, a description will be given of the processing of the recording/playback apparatus 1, which searches for a scene as related content and plays it back.

This processing is started when a predetermined program is selected from the programs recorded in the storage section 64 by the processing of Fig. 8, and the user has operated the pause button disposed on the remote controller 3 during the playback. The information indicating that the user has operated the pause button is supplied from the user-request receiving section 65 to the playback section 71.

In step S11, the playback section 71 pauses in the playback of the program, and continues to display the same screen image onto the content presentation section 72.

In step S12, the subtitles tying section 66 determines whether the user has instructed to display the subtitles on the basis of the information supplied from the user-request receiving section 65, and waits until a determination is made that the display of the subtitles has been instructed.

When the subtitles tying section 66 determines that the display of the subtitles has been instructed in step S12, the processing proceeds to step S13, the subtitles tying section 66 obtains the subtitles data tied to the screen image being displayed from the storage section 64, and the outputs the obtained subtitles data to the keyword cutting section 67. As described above, the data of all the subtitles groups tied to the scenes including the screen images being displayed on the TV 2 at the time when the user has given an instruction may be obtained.

In step S14, the keyword cutting section 67 extracts keywords from the subtitles whose data is supplied from the subtitles tying section 66, and outputs the extracted keyword data to the keyword presentation section 68. The subtitles data is also supplied to the keyword presentation section 68.

In step S15, the keyword presentation section 68 displays the keywords that can be selected as a basis of the related content search onto the TV 2, for example as shown in Fig. 4, in the highlighted display form in the subtitles, to present it to the user on the basis of the data supplied from the keyword cutting section 67.

In step S16, the related-content search section 69 determines whether the user has selected a keyword to be a basis of the search on the basis of the information supplied from the user-request receiving section 65, and waits until a determination is made that the keyword has been selected.

When the related-content search section 69 determines that a keyword to be a basis of the search has been selected in step S16, the processing proceeds to step S17, the related-content search section 69 searches for the scene including a screen image tied to the subtitles including the keyword selected by the user with reference to the scene information, etc., recorded in the storage section 64. The related-content search section 69 outputs the beginning screen image data and the subtitles data of the scene obtained as a search result to the related-content presentation section 70.

In step S18, the related-content presentation section 70 displays the scene information as the related content on the basis of the data supplied from the related-content search section 69 onto the TV 2 to present to the user. For example, a scene is presented by the screen as shown in Fig. 5.

In step S19, the playback section 71 determines whether the user has selected the scene to playback on the basis of the information supplied from the user-request receiving section 65, and waits until a determination is made that the scene has been selected.

In step S19, when the playback section 71 determines that the user has selected the scene to playback, the processing proceeds to step S20, reads the selected scene data from the storage section 64, and starts to playback the read data. The screen images and sound obtained by the playback is output to the content presentation section 72. The content presentation section 72 displays screen images of the scene to the TV 2, and outputs the sound from the speaker of the TV 2.

By the above processing, the user can easily conduct a keyword search while watching a recorded program. Also, the user can easily start the playback of the related content only by making a selection among the presentation as a search result.

In the above, the keywords to be presented to the user are extracted when the user has instructed to display the subtitles. However, the keywords may be extracted in advance before the user instructs to display the subtitles, and the extracted keyword data may be recorded in the storage section 64 in relation to the subtitles data. In this case, the keyword representation is carried out in response to the user's instruction to display the subtitles on the basis of the data read from the storage section 64.

For example, by extracting keywords in such a manner during the time from the recording of the program to the playback, it becomes possible to present keywords promptly.

Also, in the above, the keywords are displayed in the underlined form. However, in addition to this, the keywords may be displayed using various fonts, various modifications, such as by being highlighted, in bold-faced type, etc.

Furthermore, when keywords are displayed in a list, the keywords may be extracted not only from the subtitles tied to the screen image displayed when the user has instructed, but may be extracted and displayed from all the subtitles groups selected as described above. By this means, keywords are displayed by being extracted from the subtitles tied to the screen images which are near to the screen image being displayed when the display of the subtitles has been instructed. Thus, it becomes possible for the user to select a keyword to be a basis of the search from many keywords.

Also, in the above, when keywords to be a basis of the search for the related content are displayed, the user is assumed to operate a pause button to change a playback state of the watching program to a pause state, and then to display the keywords in the pause state. However, the user may be allowed to display the keywords extracted from the subtitles tied to the screen image being displayed directly during the playback by a predetermined operation.

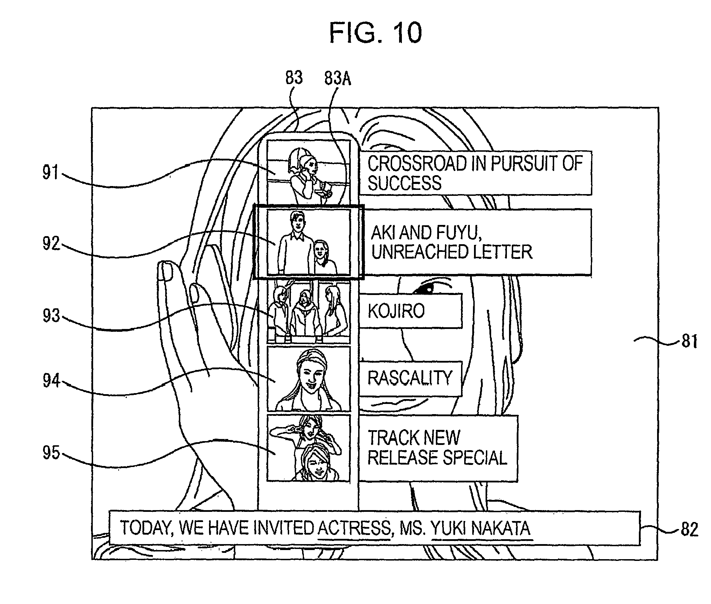

Fig. 10 is a diagram illustrating an example of a screen displayed on the TV 2.

As described above, it is possible to search for not only scenes, but also the program itself as related content. The screen shown in Fig. 10 is an example of the screen which presents a program obtained as a search result to the user. For example, as described with reference to Fig. 2, when the playback is paused during watching of a program, and a predetermined keyword is selected from the keywords displayed in accordance with the instruction of the subtitles display, the search is made for a program whose program information includes the same keyword, and the information on the search result program is presented.

In Fig. 10, it is assumed that the user who is watching a recorded program operates the pause button on the remote controller 3 during the display of the screen image 81, and then operates the subtitles-display button next. In the screen image 81, an actress's face is taken in close-up, and "Today, we have invited actress, Ms. Yuki Nakata." is superimposed on the screen image as the subtitles 82.

In the example of Fig. 10, the keywords "actress" and "Yuki Nakata", which have been extracted from the subtitles 82 "Today, we have invited actress, Ms. Yuki Nakata.", are presented to the user. Among them, "Yuki Nakata" was selected, and thus information on the programs including "Yuki Nakata" in the program information is presented as the search result.

Thumbnails 91 to 95 are displayed in the list 83 displayed extending upward from the position of the keyword "Yuki Nakata", which has become a basis of the search, in the subtitles 82. The thumbnails 91 to 95 are still images representing the programs whose program information individually includes "Yuki Nakata" selected by the user, for example as information of the performers.

The character string displayed at the right of the thumbnails 91 to 95 are program titles, and are obtained from the program information of the programs represented by the individual thumbnails. The user can select which program to be played back by viewing the titles displayed next to the thumbnails.

Also, in the example of Fig. 10, a cursor 83A is placed on the thumbnail 92. The user can move the position of the cursor 83A onto another thumbnail by pressing the up or down button of the cross button disposed on the remote controller 3. The user can select the program represented by the thumbnail on which the cursor 83A is placed at that time as the related content to be played back by pressing the decision button.

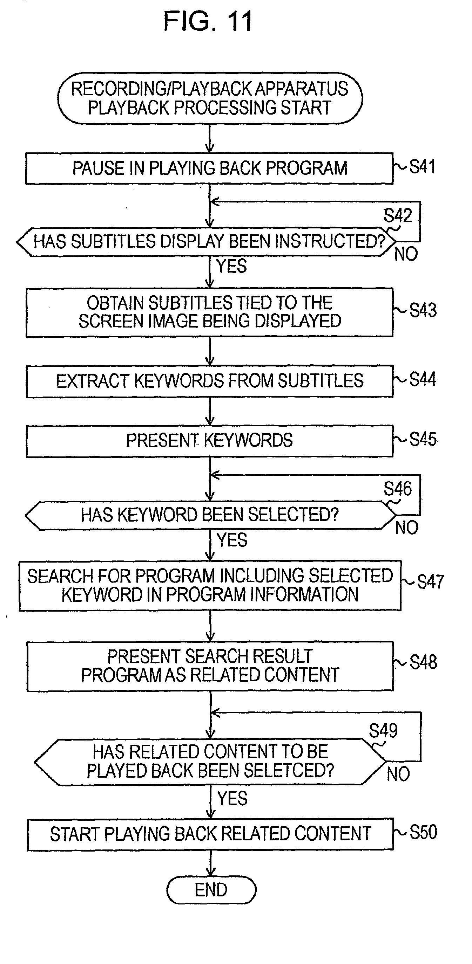

Here, with reference to the flowchart in Fig. 11, a description will be given of the processing of the recording/playback apparatus 1, which searches for and plays back programs as related contents.

The processing of steps S41 to S46 in Fig. 11 is the same processing as the processing of steps S11 to S16 in Fig. 9. The above processing is started when a predetermined program is selected from the programs recorded in the storage section 64 by the processing of Fig. 8, and the user has operated the pause button disposed on the remote controller 3 during the playback. The information indicating the contents of the user's operation is supplied from the user-request receiving section 65 to the playback section 71.

In step S41, the playback section 71 pauses in the playback of the program.

In step S42, the subtitles tying section 66 waits until a determination is made that the user has instructed the display of the subtitles. If it is determined that the user has instructed to display the subtitles, the processing proceeds to step S43.

In step S43, the subtitles tying section 66 obtains the subtitles data tied to the screen image being displayed from the storage section 64, and the outputs the obtained subtitles data to the keyword cutting section 67.

In step S44, the keyword cutting section 67 extracts keywords from the subtitles whose data is supplied from the subtitles tying section 66, and outputs the extracted keyword data to the keyword presentation section 68. The subtitles data is also supplied to the keyword presentation section 68.

In step S45, the keyword presentation section 68 displays the keywords that can be selected as a basis of the related content search onto the TV 2 to present it to the user on the basis of the data supplied from the keyword cutting section 67.

In step S46, the related-content search section 69 waits until a determination is made that a keyword to be a basis of the search has been selected. When the related-content search section 69 determines that a keyword to be a basis of the search has been selected, the processing proceeds to step S47.

In step S47, the related-content search section 69 searches for the program whose program information includes the keyword selected by the user with reference to the program information recorded in the storage section 64. The related-content search section 69 outputs the beginning screen image data and the program title data included in the program information of the program obtained as a search result to the related-content presentation section 70.

In step S48, the related-content presentation section 70 displays the program information as the related content on the basis of the data supplied from the related-content search section 69 onto the TV 2 to present to the user. For example, the information on a program is presented by the screen as shown in Fig. 10.

In step S49, the playback section 71 waits until a determination is made that the user has selected the program to playback. When the playback section 71 determines that the user has selected the program, the processing proceeds to step S50.

In step S50, the playback section 71 reads the selected program data from the storage section 64, and starts to playback the read data. The program screen images and sound obtained by the playback is output to the content presentation section 72. The content presentation section 72 displays screen images of the program to the TV 2, and outputs the sound from the speaker of the TV 2.

By the above processing, the user can easily conduct a keyword search while watching a recorded program. Also, the user can easily start the playback of the recorded program different from the program having been watched up to that time only by making a selection among the programs presented as a search result.

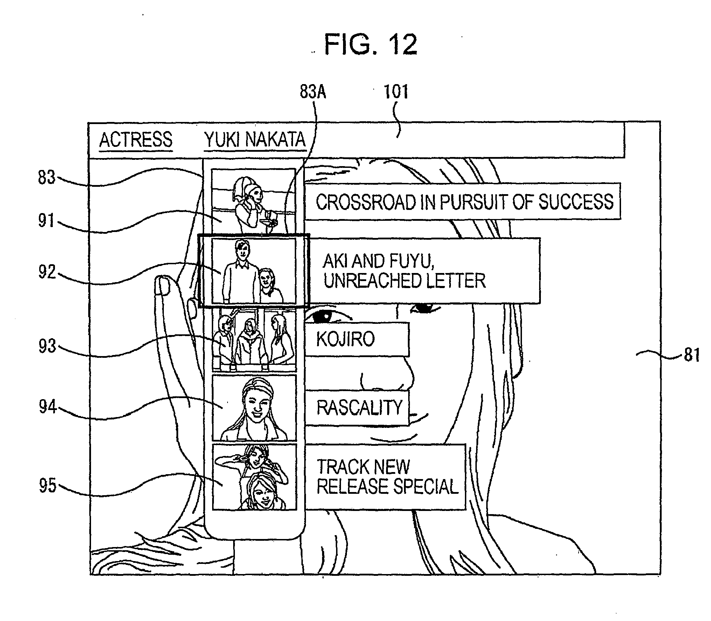

Fig. 12 is a diagram illustrating another example of a screen, displayed on the TV 2, on which a search result program is presented to the user. The same parts as those in the screen of Fig. 10 are marked with the same reference letters and numerals.

In the example of Fig. 12, keywords are not presented by subtitles being displayed and the keywords being underlined in the subtitles. An area 101 for displaying keywords is disposed along the upper edge of the screen, and the extracted keywords "actress" and "Yuki Nakata" are displayed there. When "Yuki Nakata" is selected among "actress" and "Yuki Nakata" displayed in the area 101, the list 83 is display on the basis of the position of "Yuki Nakata" in the area 101 by a pull-down method, thereby presenting the search result program to the user.

For example, when the left button of the cross button of the remote controller 3 is operated, the list 83 is display on the basis of the position of "actress" in the area 101. The thumbnails of the programs searched on the basis of the keyword "actress" are displayed in the list 83.

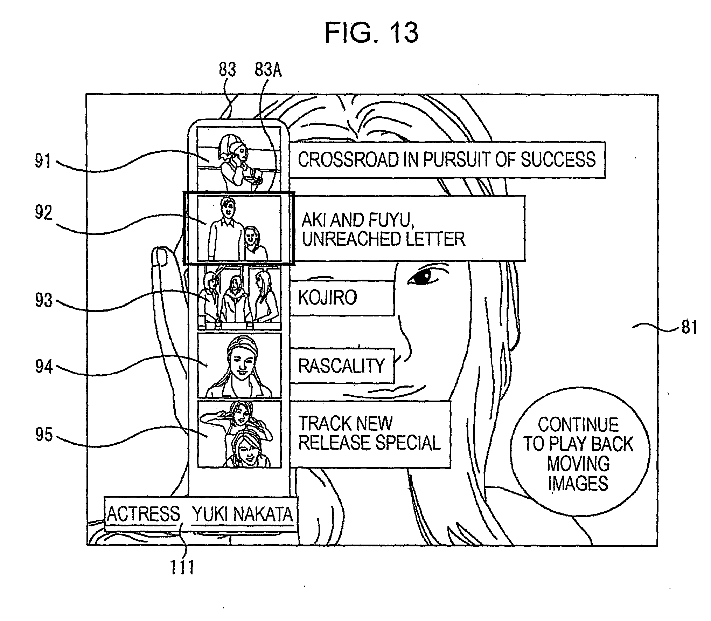

Fig. 13 is a diagram illustrating still another example of a screen, displayed on the TV 2, on which a search result program is presented to the user.

In the example of Fig. 13, the playing back of the program the user is watching is assumed not to be in a pause state, but is continued. For example, when the user operated a search button disposed on the remote controller 3, the keywords extracted from the subtitles tied to the screen image displayed at that time are arranged and displayed in an area 111 displayed in the lower left of the screen.

Since the display of the screen images is continued, the display of the screen images is changed. Every time the subtitles tied to the screen images are changed, the keywords displayed in the area 111 are changed, and presented to the user. The user watches the keywords being displayed by being dynamically changed in this manner. When a keyword that has interested the user is displayed, the user selects a keyword, and thus the user can search for the program whose program information includes an interesting keyword.

In the above, the search for a program is carried out on the basis of whether or not the keyword selected by the user is included in the program information. If a person can be recognized by the characteristic of the face of the person appearing on a screen image, the search for a program may be made such that when the user has operated a search button disposed on the remote controller 3, the faces appearing on the screen image being displayed are recognized, and the programs in which the recognized persons appear may be searched. In this case, for example the related-content search section 69 is provided with a DB in which the characteristics of faces are related to the names of that person. The DB is used for identifying the name of the persons appearing in the screen image being displayed when the search button disposed on the remote controller 3 is operated.

Also, in the above, it is assumed that the user selects a predetermined related content among the related contents, such as scenes and programs presented as a search result, and thereby the user can start the playback of the selected related content. However, for example, the user may be allowed to dub the content to a recording medium, such as a DVD (Digital Versatile Disc), etc., for example.

Furthermore, a description has been given of the case in which scenes and programs are searched as related contents. However, the search of Web sites may be conducted on the basis of a keyword selected by the user.

A keyword may be input individually by the user in addition to selecting one among the displayed keywords. Also, character strings displayed in the screen image may be recognized, and the keywords extracted from the recognized character strings may be presented to the user in addition to the keywords extracted from the subtitles which are provided by broadcasting.

Keywords may be used for a basis of searching for the programs and the scenes recommended to the user in addition to the use in searching for the related contents.

Also, at the time of presenting a keyword, the keyword is weighted by a trend keyword obtained through a network or by the category of the program being watched, and the keywords following the trend may be presented with an emphasis on them. For example, if the watching program is a music program, the names of new-face musicians immediately after debut are more heavily weighted, and are presented in preference to the other keywords.

Also, in the above, the playback of the related content selected by the user from the keywords is started. However, when the mode is set to an automatic display mode in which the playback of the related content is automatically started, the playback screen images of the related content may be displayed in the screen images of the program being watched by PinP (Picture in Picture). In this case, every time a keyword is extracted, the screen image displayed By PinP is changed in sequence.

In the above, the search for the related content is conducted when the user has selected a predetermined keyword among the presented keywords. However, the search for the related content may be conducted on the basis of all the keywords extracted from the subtitles, and only the keywords from which the related content has been obtained by the search may be presented to the user.

When the user has selected a predetermined keyword from the presented keywords, the related-content information obtained before the keyword presentation is presented to the user as a search result of the related contents on the basis of the selected keyword.

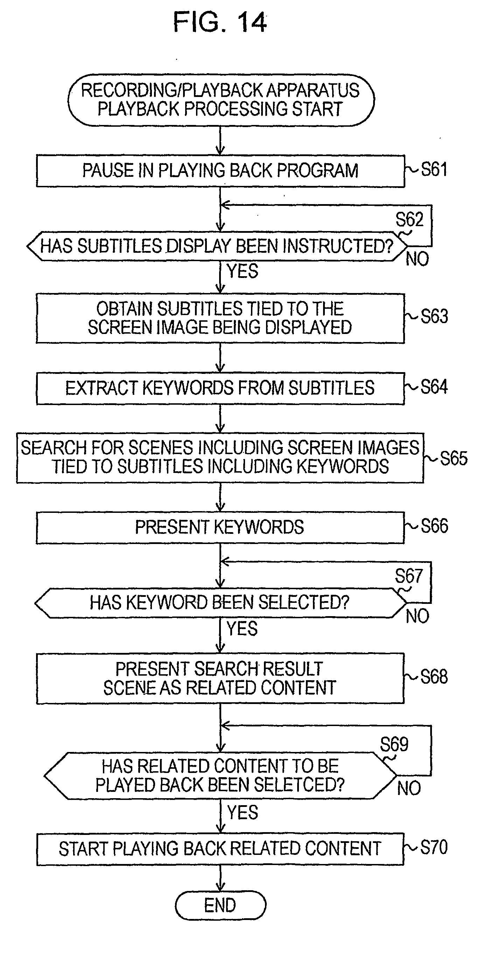

In this case, for example the processing described with reference to Fig. 9 becomes the processing shown in Fig. 14. The processing in Fig. 14 is different from the processing in Fig. 9 in the point that the search for the related contents (scenes) conducted as the processing in step S17 in Fig. 9 is carried out at the timing after the extraction of the keyword and before the presentation.

With reference to the flowchart in Fig. 14, a description will be given of the other processing of the recording/playback apparatus 1, which searches for and plays back scenes as related contents.

In step S61, the playback section 71 pauses in the playback of the program, and continues to display the same screen image onto the content presentation section 72.

In step S62, when the subtitles tying section 66 determines that the user has instructed the display of the subtitles, the processing proceeds to step S63, the subtitles tying section 66 obtains the subtitles data tied to the screen image being displayed from the storage section 64, and the outputs the obtained subtitles data to the keyword cutting section 67.

In step S64, the keyword cutting section 67 extracts keywords from the subtitles whose data is supplied from the subtitles tying section 66. The keyword cutting section 67 outputs the extracted keyword data to the keyword presentation section 68 and the related-content search section 69.

The related-content search section 69 takes notice of individual keywords extracted by the keyword cutting section 67 in step S65, and searches for the scenes including screen images tied to the subtitles including the noticed keywords. The related-content search section 69 outputs the beginning screen image data and the subtitles data of the scenes obtained as a search result to the related-content presentation section 70. Also, the information on the keywords from which the scenes, namely the related contents were allowed to be obtained as a search result is supplied to the keyword presentation section 68.

In step S66, the keyword presentation section 68 displays only the keywords from which the related contents can be obtained, out of the keywords represented by the data supplied from the keyword cutting section 67, onto the TV 2 to present it to the user.

In step S67, the related-content presentation section 70 determines whether the user has selected a predetermined keyword. If determined that the keyword has been selected, the processing proceeds to step S68.

In step S68, the related-content presentation section 70 displays the scene information including the screen image tied to the subtitles including the keyword selected by the user onto the TV 2 to present to the user.

In step S69, the playback section 71 determines whether the user has selected the scene to playback. If determined that the user has selected, the processing proceeds to step S70.

In step S70, the playback section 71 reads the selected scene data from the storage section 64, and starts to playback the read data. The screen images and sound obtained by the playback is output to the content presentation section 72. The content presentation section 72 displays screen images of the scene to the TV 2, and outputs the sound from the speaker of the TV 2.

By the above processing, it is possible to prevent the user from selecting a keyword from which related contents are not allowed to be obtained when the keyword is searched.

The above-described series of processing can be executed by hardware or can be executed by software. When the series of processing is executed by software, the programs constituting the software are built in a dedicated hardware of a computer. Alternatively, the various programs are installed, for example in a general-purpose personal computer capable of executing various functions from a program recording medium.

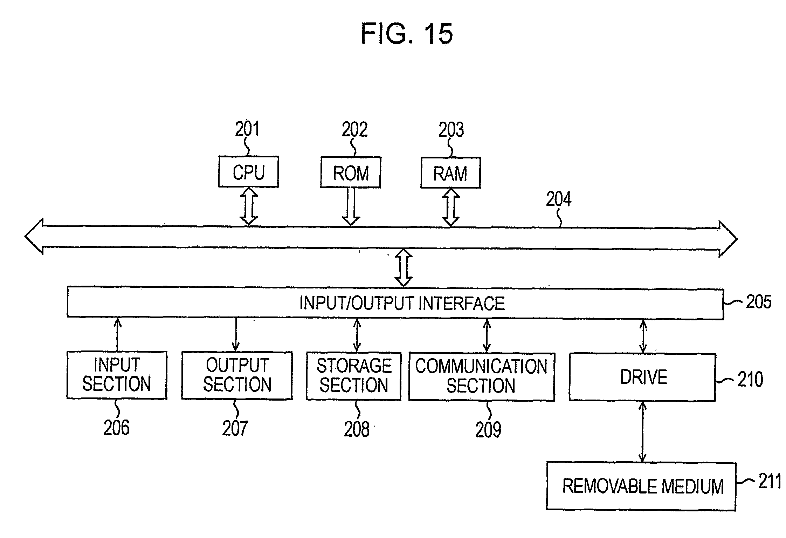

Fig. 15 is a block diagram illustrating an example of the configuration of a personal computer for executing the above-described series of processing.

A CPU (Central Processing Unit) 201 executes various kinds of processing in accordance with the programs stored in a ROM (Read Only Memory) 202 or a storage section 208. A RAM (Random Access Memory) 203 appropriately stores programs to be executed by the CPU 201, data, etc. The CPU 201, the ROM 202, and the RAM 203 are mutually connected with a bus 204.

An input/output interface 205 is also connected to the CPU 201 through the bus 204. An input section 206 including a keyboard, a mouse, a microphone, etc., and an output section 207 including a display, a speaker, etc., are connected to the input/output interface 205. The CPU 201 executes various kinds of processing in accordance with instructions input from the input section 206. The CPU 201 outputs the result of the processing to the output section 207.

The storage section 208 connected to the input/output interface 205 includes, for example a hard disk, and stores the programs executed by the CPU 201 and various kinds of data. A communication section 209 communicates with external apparatuses through a network such as the Internet, a local area network, etc.

When a removable medium 211, such as a magnetic disk, an optical disc, a magneto-optical disc, or a semiconductor memory, etc., is attached, a drive 210 connected to the input/output interface 205 drives the medium, and obtains the program and the data recorded there. The obtained program and data are transferred to the storage section 208 as necessary, and is stored there.

The program recording medium for storing the programs, which are installed in a computer and is executable by the computer, includes, as shown in Fig. 15, a removable medium 211 which is a package medium including, such as a magnetic disk (including a flexible disk), an optical disc (including a CD-ROM (Compact Disc-Read Only Memory) and a DVD (Digital Versatile Disc)), a magneto-optical disc, or a semiconductor memory, etc. Alternatively, the program recording medium includes a ROM 202 for storing the programs temporarily or permanently, a hard disk constituting the storage section 208, etc. The storage of the programs into the program recording medium is carried out through the communication section 209, which is an interface, such as a router, a modem, etc., as necessary, or using a wired or wireless communication medium, such as a local area network, the Internet, a digital satellite broadcasting, etc.

In this regard, in this specification, the steps describing the programs include the processing to be performed in time series in accordance with the described sequence as a matter of course. Also, the steps include the processing which is not necessarily executed in time series, but is executed in parallel or individually.

In this regard, an embodiment of the present invention is not limited to the embodiments described above, and various modifications are possible without departing from the scope of the present invention as defined in the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A playback apparatus comprising:
playback means for playing back a content to display images;
extraction means for extracting keywords from subtitles tied to an image being displayed;
keyword presentation means for presenting the keywords extracted by the extraction means; and
searching means for searching a content on the basis of a keyword selected from the keywords presented by the keyword presentation means.

2. The playback apparatus according to Claim 1,
wherein when a user gives an instruction, the extraction means extracts a keyword from subtitles tied to an image being displayed.

3. The playback apparatus according to Claim 1, further comprising cutting means for cutting a content for each scene,
wherein the searching means searches for a scene including an image to which subtitles including a keyword selected from the keywords presented by the keyword presentation means are tied from the scenes cut by the cutting means.

4. The playback apparatus according to Claim 1,
wherein the searching means searches for a program including a keyword selected from the keywords presented by the keyword presentation means in program information.

5. The playback apparatus according to Claim 1, further comprising content presenting means for presenting information on a content searched by the searching means,
wherein the playback means plays back a content selected from the contents whose information has been presented by the content presenting means.

6. A method of searching, comprising the steps of:
playing back a content to display images;
extracting keywords from subtitles tied to an image being displayed;
presenting the extracted keywords; and
searching a content on the basis of a keyword selected from the presented keywords.

7. A program for causing a computer to perform processing, the processing comprising the steps of:
playing back a content to display images;
extracting keywords from subtitles tied to an image being displayed;
presenting the extracted keywords; and
searching a content on the basis of a keyword selected from the presented keywords.

8. A playback apparatus comprising:
a playback mechanism for playing back a content to display images;
an extraction mechanism for extracting keywords from subtitles tied to an image being displayed;
a keyword presentation mechanism for presenting the keywords extracted by the extraction mechanism; and
a searching mechanism for searching a content on the basis of a keyword selected from the keywords presented by the keyword presentation mechanism.
